# EUROPEAN PATENT APPLICATION

(11) **EP 2 827 080 A1**
(43) Date of publication of application: **21.01.2015**
(21) Application number: 14174086.0
(22) Date of filing: 26.06.2014
(51) Int. Cl.: F25B 9/00, F25B 31/00, F25B 13/00

(54) **Refrigerating apparatus**

(30) Priority: 28.06.2013 KR 20130075046
(71) Applicant: Samsung Electronics Co., Ltd, Gyeonggi-do 443-742 (KR)
(72) Inventor: Kim, Ha Na, Gyeonggi-do (KR); Lim, Byung Han, Gyeonggi-do (KR); Kim, Jung Ho, Gyeonggi-do (KR); Hong, Jin Woo, Gyeonggi-do (KR); Kim, Dong Suk, Gyeonggi-do (KR); Baek, Jong Yeop, Busan (KR)
(74) Representative: Walaski, Jan Filip

(57) **Abstract**

A refrigerating apparatus including a refrigerant circuit forming a refrigeration cycle using an operating refrigerant selected from among R1234yf single refrigerant, R1234yf mixed refrigerant, R1234ze single refrigerant, and R1234ze mixed refrigerant. The refrigerant circuit has a compressor using refrigeration oil including an extreme pressure additive. An environmentally friendly refrigerant is used and an air conditioner exhibiting high cooling efficiency is provided.

## Description

The present invention relates to a refrigerating apparatus, particularly to a refrigerating apparatus for an air conditioner exhibiting high efficiency.

Generally, an air conditioner is an apparatus that adjusts temperature, humidity, air current, air distribution, etc., such that people may be comfortable, and removes dust from air using a refrigeration cycle. The refrigeration cycle is constituted by a compressor, a condenser, an evaporator, and a fan.

An air conditioner including an indoor unit and an outdoor unit which are separately installed is referred to as a separated air conditioner and an air conditioner including an indoor unit and an outdoor unit installed in a cabinet is referred to as an integrated air conditioner.

The indoor unit of the separated air conditioner includes a heat exchanger to exchange heat with air suctioned into a panel and a fan to suction air from a room into the panel and to supply the suctioned air into the room.

A conventional air conditioner uses R₂₂ refrigerant (global warming potential "GWP": 1500), R410A refrigerant (GWP: 1730), or R407C refrigerant (GWP: 1530). However, GWP of these refrigerants exceeds 1000 with the result that these refrigerants are not suitable in terms of global warming prevention. Meanwhile, ammonia (GWP: o) and propane (GWP: 3) have been put to practical use as a refrigerant having low GWP. However, ammonia is toxic and propane is highly flammable. For these reasons, ammonia and propane have limited applications and are not proper as a refrigerant for a general air conditioner.

It is an aspect of the present invention to provide an air conditioner that realizes an environmentally friendly refrigeration cycle using a low GWP refrigerant and has improved efficiency.

Additional aspects of the invention will be set forth in part in the description which follows and, in part, will be obvious from the description, or may be learned by practice of the invention.

In accordance with an aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive.

The refrigeration oil may include ester-based, polyvinyl-based, and benzene-based oil.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is 5 kw or less, the refrigerant circuit has a liquid side pipe having an inner diameter of 5.95 mm or more.

The liquid side pipe of the refrigerant circuit may have an inner diameter of 5.95 to 6.2 mm.

The liquid side pipe of the refrigerant circuit may have an inner diameter of 6.0 to 6.35 mm.

The liquid side pipe of the refrigerant circuit may have an inner diameter of 6.1 to 6.6 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 5 kw to 18 kw, the refrigerant circuit has a liquid side pipe having an inner diameter of more than 5.95 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 18 kw to 22.4 kw, the refrigerant circuit has a liquid side pipe having an inner diameter of more than 5.95 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 5 kw to 22.4 kw, the refrigerant circuit has a liquid side pipe having an inner diameter of more than 5.95 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is 22.4 kw or more, the refrigerant circuit has a liquid side pipe having an inner diameter of more than 9.12 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is 3.2 kw or less, the refrigerant circuit has a gas side pipe having an inner diameter of more than 5.75 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 3.2 kw to 5 kw, the refrigerant circuit has a gas side pipe having an inner diameter of more than 5.75 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 5 kw to 9 kw, the refrigerant circuit has a gas side pipe having an inner diameter of more than 5.75 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 9 kw to 18 kw, the refrigerant circuit has a gas side pipe having an inner diameter of more than 5.75 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 18 kw to 22.4 kw, the refrigerant circuit has a gas side pipe having an inner diameter of more than 5.75 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 22.4 kw, the refrigerant circuit has a gas side pipe having an inner diameter of more than 5.75 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an indoor heat exchanger has a heat pipe having an inner diameter of 5.75 to 7.6 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an outdoor heat exchanger has a heat pipe having an inner diameter of 5.75 to 7.6 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an outdoor heat exchanger has a heat pipe having an inner diameter of 7.5 to 9.52 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an outdoor heat exchanger has a heat pipe having an inner diameter of 9.4 to 12.3 mm.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and an evaporator to absorb heat from surroundings, wherein 120 to 300 g of the operating refrigerant is used per cooling capacity of 1 kw of the evaporator of the refrigerant circuit.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and an evaporator to absorb heat from surroundings, wherein 370 to 700 g of the operating refrigerant is used per cooling capacity of 1 kw of the evaporator of the refrigerant circuit.

In accordance with another aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and a condenser to condense a refrigerant compressed by the compressor, wherein 84 to 300 g of the refrigerant is used per internal volume of 1L of the condenser of the refrigerant circuit.

In accordance with a further aspect of the present invention, a refrigerating apparatus includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and a condenser to condense a refrigerant compressed by the compressor, wherein 260 to 700 g of the refrigerant is used per internal volume of 1 L of the condenser of the refrigerant circuit.

The liquid side pipe may include a liquid side connection pipe between an indoor unit and an outdoor unit.

The gas side pipe may include a gas side connection pipe between an indoor unit and an outdoor unit.

These and/or other aspects of the invention will become apparent and more readily appreciated from the following description of the embodiments, taken in conjunction with the accompanying drawings in which:
FIG. 1 is a view showing a refrigeration cycle of an air conditioner according to an embodiment of the present invention;
FIG. 2 is a graph showing cooling efficiency according to change of refrigerant amount;
FIG. 3 is a graph showing heating efficiency according to change of refrigerant amount; and
FIG. 4 is a graph showing pressure drop per refrigerant according to conditions per temperature.

GWP is a numerical value indicating a contribution degree of greenhouse gases to global warming based on an effect of carbon dioxide on global warming. That is, GWP indicates a warming effect per unit mass. The higher GWP is, the more the chemical contributes to global warming.

R1234yf single refrigerant (GWP: 4), R1234ze single refrigerant (GWP: 6), R1234yf mixed refrigerant and R1234ze mixed refrigerant having a GWP of 500 or less are considered to be refrigerants having low GWP, no toxicity, and low flammability. However, when any one of R1234yf single refrigerant, R1234yf mixed refrigerant, R1234ze single refrigerant, and R1234ze mixed refrigerant is adopted as a refrigerant, a pressure drop of a compressor is higher than when R22 refrigerant (GWP: 1500), R410A refrigerant (GW: 1730), or R407C refrigerant (GWP: 1530) is adopted as a refrigerant. Embodiments of the present invention provide an air conditioner that uses a refrigerant having low GWP, and has high safety and high efficiency.

In embodiments of the present invention, a motor of a compressor is insulated with a resin and, in addition, R1234yf single refrigerant, R1234yf mixed refrigerant, R1234ze single refrigerant, or R1234ze mixed refrigerant is used.

R1234yf single refrigerant, R1234yf mixed refrigerant, R1234ze single refrigerant, or R1234ze mixed refrigerant exhibits a higher cooling effect than R22 refrigerant, R410A refrigerant, or R407C refrigerant. Consequently, a smaller refrigerant amount is used to provide the same performance. However, pressure loss of R1234yf single refrigerant, R1234yf mixed refrigerant, R1234ze single refrigerant, or R1234ze mixed refrigerant when flowing in a channel having the same diameter is higher than that of R22 refrigerant, R410A refrigerant, or R407C refrigerant.

A refrigerant pipe includes a liquid side pipe, a discharge pipe, and a suction pipe. The liquid side pipe is connected between an outlet of a condenser and an inlet of an evaporator, the discharge pipe is connected between a discharge side of the compressor and an inlet of the condenser, and the suction pipe is connected between an outlet of the evaporator and a suction side of the compressor.

In a case in which the above refrigerant pipe has the same inner diameter of a refrigerant pipe of a refrigerant circuit using a conventional refrigerant, such as R22 refrigerant, R410A refrigerant, or R407C refrigerant, pressure loss is generated. In addition, a saturated temperature difference equivalent to pressure loss of the refrigerant is important as a factor deciding performance of a heat exchanger.

Although R1234yf single refrigerant, R1234yf mixed refrigerant, R1234ze single refrigerant, and R1234ze mixed refrigerant are environmentally friendly refrigerants having low GWP, these refrigerants have higher pressure loss and lower saturated temperature difference than the conventional refrigerants under the same conditions.

The diameter of the pipe or the number of paths of the heat exchanger may be increased to prevent pressure loss, to reduce the saturated temperature difference and to have the same performance as a conventional apparatus.

In a case in which the diameter of the pipe or the number of paths of the heat exchanger are increased, the same pressure loss as the conventional refrigerants (R22, R410A, and R407C) may be achieved even when R1234yf refrigerant, R1234ze refrigerant, or R1234yf or R1234ze mixed refrigerant is used. In addition, R1234yf refrigerant, R1234ze refrigerant, and R1234yf and R1234ze mixed refrigerants have a higher cooling effect than a refrigerant used in a conventional air conditioner. Consequently, the above refrigerants may have more improved air conditioning efficiency and low GWP. As a result, the above refrigerants are environmentally friendly.

In addition, refrigeration oil may include an extreme pressure additive.

The extreme pressure additive is a kind of anti-wear agent. The extreme pressure additive forms a partial film on a portion to which extreme pressure and impact load is applied when the temperature of the portion is high to prevent the portion from being worn, scratched, pressed, etc. Ester-based, polyvinyl-based, and benzene-based extreme pressure additives may be used as the extreme pressure additive.

Specifically, one embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive.

The refrigeration oil may include ester-based, polyvinyl-based, and benzene-based oil.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is 5 kw or less, the refrigerant circuit has a liquid side pipe having an inner diameter of more than 5.95 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants as an operating refrigerant, the refrigerant circuit having a compressor using refrigeration oil including an extreme pressure additive, wherein, when a rated cooling capacity is 5 kw or less, the refrigerant circuit has a liquid side pipe having an inner diameter of 5.95 to 6.2 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is 5 kw or less, the refrigerant circuit has a liquid side pipe having an inner diameter of 6.0 to 6.35 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is 5 kw or less, the refrigerant circuit has a liquid side pipe having an inner diameter of 6.1 to 6.6 mm. Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 5 kw to 18 kw, the refrigerant circuit has a liquid side pipe having an inner diameter of more than 5.95 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 18 kw to 22.4 kw, the refrigerant circuit has a liquid side pipe having an inner diameter of more than 5.95 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 5 kw to 22.4 kw, the refrigerant circuit has a liquid side pipe having an inner diameter of more than 5.95 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is 22.4 kw or more, the refrigerant circuit has a liquid side pipe having an inner diameter of more than 9.12 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is 3.2 kw or less, the refrigerant circuit has a gas side pipe having an inner diameter of more than 5.75 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 3.2 kw to 5 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 5 kw to 9 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 9 kw to 18 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 18 kw to 22.4 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein, when a rated cooling capacity is more than 22.4 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein an indoor heat exchanger has a heat pipe having an inner diameter of 5.75 to 7.6 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein an outdoor heat exchanger has a heat pipe having an inner diameter of 5.75 to 7.6 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein an outdoor heat exchanger has a heat pipe having an inner diameter of 7.5 to 9.52 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive, wherein an outdoor heat exchanger has a heat pipe having an inner diameter of 9.4 to 12.3 mm.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive and an evaporator to absorb heat from surroundings, wherein 120 to 300 g of the operating refrigerant is used per cooling capacity of 1 kw of the evaporator of the refrigerant circuit.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive and an evaporator to absorb heat from surroundings, wherein 370 to 700 g of the operating refrigerant is used per cooling capacity of 1 kw of the evaporator of the refrigerant circuit.

Another embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive and a condenser to condense a refrigerant compressed by the compressor, wherein 84 to 300 g of the refrigerant is used per internal volume of 1 L of the condenser of the refrigerant circuit.

A further embodiment of the present invention includes a refrigerant circuit forming a refrigeration cycle using an operating refrigerant selected from among R1234yf refrigerant, R1234ze refrigerant, and R1234yf and R1234ze mixed refrigerants, the refrigerant circuit having a compressor using refrigeration oil including an extreme pressure additive and a condenser to condense a refrigerant compressed by the compressor, wherein 260 to 700 g of the refrigerant is used per internal volume of 1 L of the condenser of the refrigerant circuit.

The liquid side pipe may include a liquid side connection pipe between an indoor unit and an outdoor unit.

The gas side pipe may include a gas side connection pipe between an indoor unit and an outdoor unit.

Specifically, one embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive.

The refrigeration oil may include ester-based, polyvinyl-based, and benzene-based oil.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is 5 kw or less, the refrigerant circuit has a liquid side pipe having an inner diameter of 5.95 mm or more.

The liquid side pipe of the refrigerant circuit may have an inner diameter of 5.95 to 6.2 mm.

The liquid side pipe of the refrigerant circuit may have an inner diameter of 6.0 to 6.35 mm.

The liquid side pipe of the refrigerant circuit may have an inner diameter of 6.1 to 6.6 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 5 kw to 18 kw, the refrigerant circuit has a liquid side pipe having an inner diameter of more than 5.95 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 18 kw to 22.4 kw, the refrigerant circuit has a liquid side pipe having an inner diameter of more than 5.95 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 5 kw to 22.4 kw, the refrigerant circuit has a liquid side pipe having an inner diameter of more than 5.95 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is 22.4 kw or more, the refrigerant circuit has a liquid side pipe having an inner diameter of more than 9.12 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is 3.2 kw or less, the refrigerant circuit has a gas side pipe having an inner diameter of more than 5.75 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 3.2 kw to 5 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 5 kw to 9 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 9 kw to 18 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 18 kw to 22.4 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein, when a rated cooling capacity is more than 22.4 kw, the refrigerant circuit has a gas side pipe having an inner diameter of more than 5.75 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an indoor heat exchanger has a heat pipe having an inner diameter of 5.75 to 7.6 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an outdoor heat exchanger has a heat pipe having an inner diameter of 5.75 to 7.6 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an outdoor heat exchanger has a heat pipe having an inner diameter of 7.5 to 9.52 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive, wherein an outdoor heat exchanger has a heat pipe having an inner diameter of 9.4 to 12.3 mm.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and an evaporator to absorb heat from surroundings, wherein 120 to 300 g of the operating refrigerant is used per cooling capacity of 1 kw of the evaporator of the refrigerant circuit.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and an evaporator to absorb heat from surroundings, wherein 370 to 700 g of the operating refrigerant is used per cooling capacity of 1 kw of the evaporator of the refrigerant circuit.

Another embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and a condenser to condense a refrigerant compressed by the compressor, wherein 84 to 300 g of the refrigerant is used per internal volume of 1 L of the condenser of the refrigerant circuit.

A further embodiment of the present invention includes a refrigerant circuit forming a refrigeration cycle using an operating refrigerant selected from among R1234yf single refrigerant, R1234yf mixed refrigerant, R1234ze single refrigerant, and R1234ze mixed refrigerant, the refrigerant circuit having a compressor using refrigeration oil including an extreme pressure additive and a condenser to condense a refrigerant compressed by the compressor, wherein 260 to 700 g of the refrigerant is used per internal volume of 1 L of the condenser of the refrigerant circuit.

The liquid side pipe may include a liquid side connection pipe between an indoor unit and an outdoor unit.

The gas side pipe may include a gas side connection pipe between an indoor unit and an outdoor unit.

Reference will now be made in detail to the embodiments of the present invention, examples of which are illustrated in the accompanying drawings, wherein like reference numerals refer to like elements throughout.

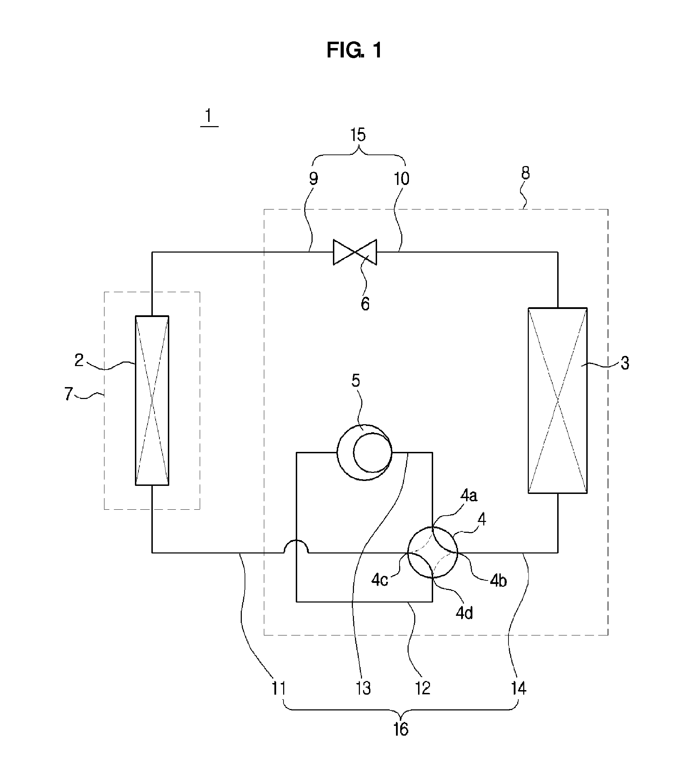

FIG. 1 is a view showing a refrigeration cycle of an air conditioner according to an embodiment of the present invention.

A refrigerant circuit 1, which is a refrigerant circuit forming a refrigeration cycle, is configured such that a compressor 5, a four-way switching valve 4, an outdoor heat exchanger 3, which is a heat source side heat exchanger, an expansion valve 6, which is an expansion device, and an indoor heat exchanger 2, which is a user side heat exchanger, are sequentially connected to one another via a gas side pipe 16 and a liquid side pipe 15, which are refrigerant pipes.

Specifically, a discharge side of the compressor 5 and a first port 4a of the four-way switching valve 4 are connected to each other via a first gas side pipe 13. A second port 4b of the four-way switching valve 4 and the outdoor heat exchanger 3 are connected to each other via a second gas side pipe 14. The outdoor heat exchanger 3 and the expansion valve 6 are connected to each other via a first liquid side pipe 10. The expansion valve 6 and the indoor heat exchanger 2 are connected to each other via a second liquid side pipe 9. The indoor heat exchanger 2 and a third port 4c of the four-way switching valve 4 are connected to each other via a third gas side pipe 11. A fourth port 4d of the four-way switching valve 4 and a suction side of the compressor 5 are connected to each other via a fourth gas side pipe 12.

The compressor 5, the first gas side pipe 13, the four-way switching valve 4, the second gas side pipe 14, the outdoor heat exchanger 3, the first liquid side pipe 10, the expansion valve 6, and the fourth gas side pipe 12 are received in an outdoor unit 8 together with an outdoor fan (not shown). On the other hand, the indoor heat exchanger 2 is received in an indoor unit 7 together with an indoor fan (not shown). Some of the second liquid side pipe 9 and the third gas side pipe 11 constitute a connection pipe between the outdoor unit 8 and the indoor unit 7.

Hereinafter, operation of an air conditioner with the above-stated construction will be described based on refrigerant circulation in the refrigerant circuit 1. During cooling operation, the four-way switching valve 4 is set to a solid line side shown in FIG. 1. That is, the first port 4a and the second port 4b communicate with each other and the third port 4c and the fourth port 4d communicate with each other.

In this state, a gas refrigerant discharged from the compressor 5 is introduced into the outdoor heat exchanger 3, in which the gas refrigerant is condensed, via the first gas side pipe 13, the four-way switching valve 4, and the second gas side pipe 14. A liquid refrigerant discharged from the outdoor heat exchanger 3 is introduced into the expansion valve 6, in which the liquid refrigerant is decompressed into a two-phase (gas and liquid) refrigerant, via the first liquid side pipe 10. The two-phase refrigerant discharged from the expansion valve 6 is introduced into the indoor heat exchanger 2, in which the two-phase refrigerant is heat-exchanged with indoor air to cool the indoor air while being evaporated, via the second liquid side pipe 9. A gas refrigerant discharged from the indoor heat exchanger 2 is suctioned by the compressor 5 via the third gas side pipe 11, the four-way switching valve 4, and the fourth gas side pipe 12.

On the other hand, during heating operation, the four-way switching valve 4 is set to a dotted line side shown in FIG. 1. That is, the first port 4a and the fourth port 4d communicate with each other and the second port 4b and the third port 4c communicate with each other.

In this state, a gas refrigerant discharged from the compressor 5 is introduced into the indoor heat exchanger 2 via the first gas side pipe 13, the four-way switching valve 4, and the third gas side pipe 11. The refrigerant introduced into the indoor heat exchanger 2 is heat-exchanged with indoor air to heat the indoor air while being condensed. A liquid refrigerant discharged from the indoor heat exchanger 2 is introduced into the expansion valve 6, in which the liquid refrigerant is decompressed into a two-phase (gas and liquid) refrigerant, via the second liquid side pipe 9. The two-phase refrigerant discharged from the expansion valve 6 is introduced into the outdoor heat exchanger 3, in which the two-phase refrigerant is evaporated, via the first liquid side pipe 10.

A gas refrigerant discharged from the outdoor heat exchanger 3 is suctioned by the compressor 5 via the second gas side pipe 14, the four-way switching valve 4, and the fourth gas side pipe 12.

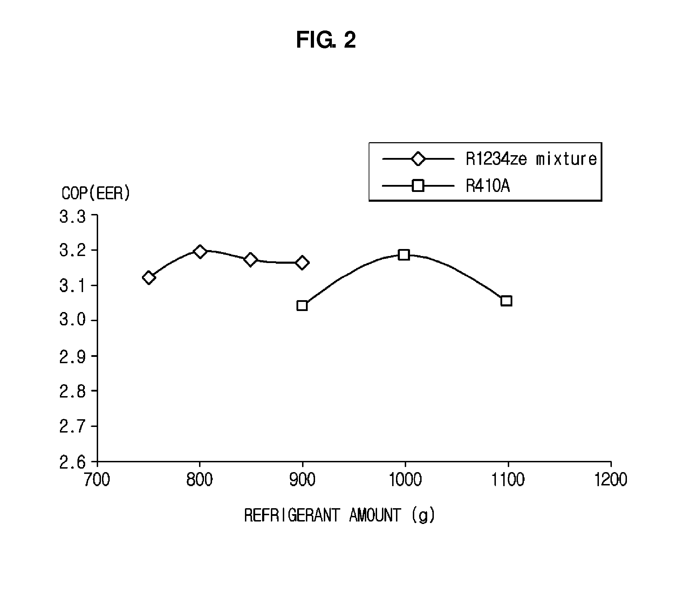

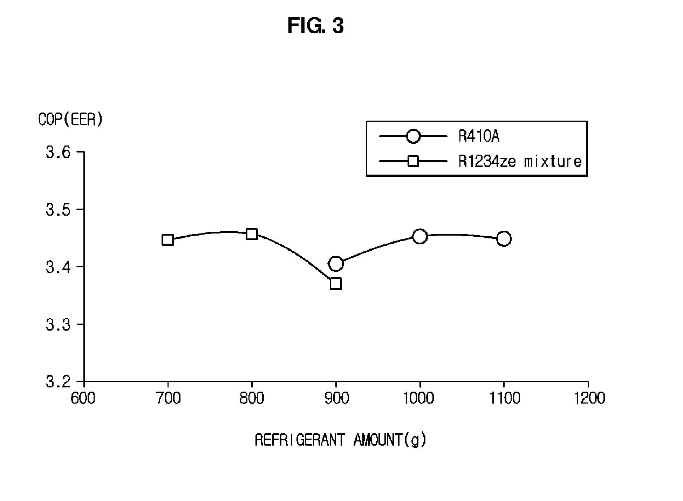

FIG. 2 is a graph showing cooling efficiency according to a change of refrigerant a amount and FIG. 3 is a graph showing heating efficiency according to a change of a refrigerant amount.

Specifically, FIG. 2 is a graph comparing cooling coefficients of performance (COPs), which are cooling efficiencies, of R410a refrigerant and R1234ze mixed refrigerant according to a change of refrigerant amounts thereof and FIG. 3 is a graph comparing heating COPs, which are heating efficiencies, of R410a refrigerant and R1234ze mixed refrigerant according to a change of refrigerant amounts thereof.

As seen from FIGS. 2 and 3, R1234ze mixed refrigerant needs a smaller refrigerant amount than R410a refrigerant to achieve the same COP as the R410a refrigerant, which means that R1234ze mixed refrigerant exhibits a higher cooling effect per unit volume than R410a refrigerant.

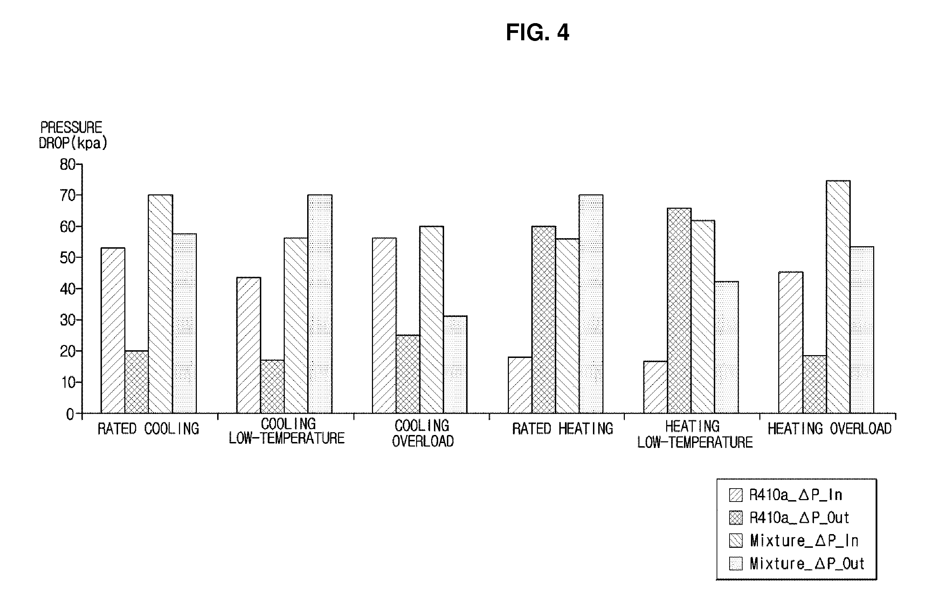

FIG. 4 is a graph showing pressure drop per refrigerant according to conditions per temperature.

Detailed conditions per temperature, such as rated cooling, cooling low-temperature, cooling and load, rated heating, heating low-temperature, and heating overload, are shown in Table 1.

**Table 1: Detailed conditions per temperature**

| | | Rated cooling | Cooling low-temperature | Cooling overload | Rated heating | Heating low-temperature | Heating overload |
|---|---|---|---|---|---|---|---|
| Indoor | Dry bulb temperature (°C) | 27 | 27 | 27 | 20 | 20 | 20 |
| | Wet bulb temperature (°C) | 19 | 19 | 19 | 15 | 15 | 15 |
| Outdoor | Dry bulb temperature (°C) | 35 | 21 | 46 | 7 | -15 | 24 |
| | Wet bulb temperature (°C) | 24 | 15 | 26 | 6 | - | 18 |

R410a_ΔP_In means a pressure drop amount of R410a refrigerant in the indoor heat exchanger, R410a_ΔP_Out means a pressure drop amount of R410a refrigerant in the outdoor heat exchanger, Mixture_ΔP_In means a pressure drop amount of R1234yf mixed refrigerant or R1234ze mixed refrigerant in the indoor heat exchanger, and Mixture_ΔP_Out means a pressure drop amount of R1234yf mixed refrigerant or R1234ze mixed refrigerant in the outdoor heat exchanger.

As seen from FIG. 4, in the respective conditions per temperature, the pressure drop of R1234yf mixed refrigerant and R1234ze mixed refrigerant is higher than that of R410a refrigerant in the indoor heat exchanger and the outdoor heat exchanger.

As a result, R1234yf single refrigerant, R1234yf mixed refrigerant, R1234ze single refrigerant, and R1234ze mixed refrigerant exhibit a higher cooling effect per unit volume than R22, R410A, and R407C refrigerants and thus need a smaller refrigerant circulation amount necessary to exhibit desired capacity than R22, R410A, and R407C refrigerants. However, pressure loss of R1234yf single refrigerant, R1234yf mixed refrigerant, R1234ze single refrigerant, and R1234ze mixed refrigerant is increased. For this reason, the inner diameter of a heat pipe of each heat exchanger may be increased such that R1234yf single refrigerant, R1234yf mixed refrigerant, R1234ze single refrigerant, and R1234ze mixed refrigerant have the same pressure loss as R22, R410A, and R407C refrigerants, which are conventional refrigerants used in air conditioners.

In a case in which the inner diameter of the heat pipe is increased such that R1234yf single refrigerant, R1234yf mixed refrigerant, R1234ze single refrigerant, and R1234ze mixed refrigerant have the same pressure loss as the conventional refrigerants, R1234yf single refrigerant, R1234yf mixed refrigerant, R1234ze single refrigerant, and R1234ze mixed refrigerant exhibit a higher cooling effect per unit volume than R22, R410A, and R407C refrigerants, thereby improving the cooling effect. Furthermore, R1234yf single refrigerant has a GWP of 4, R1234ze single refrigerant has a GWP of 6, and R1234yf mixed refrigerant and R1234ze mixed refrigerant have a GWP of 500 or less. Consequently, the air conditioner causes less global warming.

As is apparent from the above description, according to embodiments of the present invention, performance of the refrigerating apparatus is improved and a refrigerant amount of the refrigerating apparatus is decreased.

Although a few embodiments of the present invention have been shown and described, it would be appreciated by those skilled in the art that changes may be made in these embodiments without departing from the principles of the invention, the scope of which is defined in the claims.

## Claims

1. A refrigerating apparatus comprising a refrigerant circuit forming a refrigeration cycle using any one selected from among R1234yf single refrigerant, R1234yf mixed refrigerant, R1234ze single refrigerant, and R1234ze mixed refrigerant as an operating refrigerant, the refrigerant circuit having a compressor using refrigeration oil comprising an extreme pressure additive.

2. The refrigerating apparatus according to claim 1, wherein the refrigeration oil comprises ester-based, polyvinyl-based, and benzene-based oil.

3. The refrigerating apparatus according to claim 1, wherein, when a rated cooling capacity is 5 kw or less, the refrigerant circuit has a liquid side pipe having an inner diameter of 5.95 to 6.2 mm.

4. The refrigerating apparatus according to claim 1, wherein, when a rated cooling capacity is 5 kw or less, the refrigerant circuit has a liquid side pipe having an inner diameter of 6.0 to 6.35 mm.

5. The refrigerating apparatus according to claim 1, wherein, when a rated cooling capacity is 5 kw or less, the refrigerant circuit has a liquid side pipe having an inner diameter of 6.1 to 6.6 mm.

6. The refrigerating apparatus according to claim 1, wherein, when a rated cooling capacity is more than 5 kw to 18 kw, the refrigerant circuit has a liquid side pipe having an inner diameter of more than 5.95 mm.

7. The refrigerating apparatus according to claim 1, wherein, when a rated cooling capacity is more than 18 kw to 22.4 kw, the refrigerant circuit has a liquid side pipe having an inner diameter of more than 5.95 mm.

8. The refrigerating apparatus according to claim 1, wherein, when a rated cooling capacity is more than 5 kw to 22.4 kw, the refrigerant circuit has a liquid side pipe having an inner diameter of more than 5.95 mm.

9. The refrigerating apparatus according to claim 1, wherein, when a rated cooling capacity is 22.4 kw or more, the refrigerant circuit has a liquid side pipe having an inner diameter of more than 9.12 mm.

10. The refrigerating apparatus according to claim 1, wherein, when a rated cooling capacity is 3.2 kw or less, the refrigerant circuit has a gas side pipe having an inner diameter of more than 5.75 mm.

11. The refrigerating apparatus according to claim 1, wherein, when a rated cooling capacity is more than 3.2 kw to 5 kw, the refrigerant circuit has a gas side pipe having an inner diameter of more than 5.75 mm.

12. The refrigerating apparatus according to claim 1, wherein, when a rated cooling capacity is more than 5 kw to 9 kw, the refrigerant circuit has a gas side pipe having an inner diameter of more than 5.75 mm.

13. The refrigerating apparatus according to claim 1, wherein, when a rated cooling capacity is more than 9 kw to 18 kw, the refrigerant circuit has a gas side pipe having an inner diameter of more than 5.75 mm.

14. The refrigerating apparatus according to claim 1, wherein, when a rated cooling capacity is more than 18 kw to 22.4 kw, the refrigerant circuit has a gas side pipe having an inner diameter of more than 5.75 mm.

15. The refrigerating apparatus according to claim 1, wherein, when a rated cooling capacity is more than 22.4 kw, the refrigerant circuit has a gas side pipe having an inner diameter of more than 5.75 mm.
